(19) Europäisches Patentamt

European Patent Office

Office européen des brevets

(11) **EP 0 995 311 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **98941341.4**

(22) Anmeldetag: **17.07.1998**

(51) Int Cl.$^7$: **H04N 7/08**

(86) Internationale Anmeldenummer:
**PCT/EP98/04425**

(87) Internationale Veröffentlichungsnummer:
**WO 99/004565 (28.01.1999 Gazette 1999/04)**

(54) **VERFAHREN UND VORRICHTUNG ZUR ERZEUGUNG EINES FERNSEHAUSSTRAHLUNGSSIGNALS MIT ZUSATZINFORMATION SOWIE VORRICHTUNG ZUM ABTRENNEN DER ZUSATZINFORMATION AUS DEM FERNSEHAUSSTRAHLUNGSSIGNAL**

METHOD FOR PRODUCING A TELEVISION TRANSMISSION SIGNAL WITH ADDITIONAL INFORMATION AND DEVICE FOR SEPARATING THE ADDITIONAL INFORMATION FroM THE TELEVISION TRANSMISSION SIGNAL

PROCEDE POUR LA GENERATION D'UN SIGNAL DE DIFFUSION DE TELEVISION CONTENANT UNE INFORMATION SUPPLEMENTAIRE, DISPOSITIF POUR EXECUTER CE PROCEDE, AINSI QUE DISPOSITIF POUR SEPARER L'INFORMATION SUPPLEMENTAIRE DU SIGNAL DE DIFFUSION DE TELEVISION

(84) Benannte Vertragsstaaten:
**AT BE CH DE ES FI FR GB IE IT LI LU NL SE**

(30) Priorität: **18.07.1997 DE 19730797**

(43) Veröffentlichungstag der Anmeldung:
**26.04.2000 Patentblatt 2000/17**

(73) Patentinhaber: **digi4media Gesellschaft für effiziente Übertragungstechnologien mbH 44227 Dortmund (DE)**

(72) Erfinder: **digi4media Gesellschaft für effiziente Übertragungstechnologien mbH 44227 Dortmund (DE)**

(74) Vertreter: **Paul, Dieter-Alfred, Dipl.-Ing. Paul & Albrecht Patentanwaltssozietät Hellersbergstrasse 18 41460 Neuss (DE)**

(56) Entgegenhaltungen:
**EP-A- 0 360 615     EP-A- 0 595 403
EP-A- 0 710 022     WO-A-91/20159
WO-A-97/39410       US-A- 3 885 217**

**Beschreibung**

Die Erfindung betrifft ein Verfahren zur Erzeugung eines Fernsehausstrahlungssignals mit Zusatzinformation, eine Vorrichtung zur Durchführung dieses Verfahrens sowie eine Vorrichtung zum Abtrennen der Zusatzinformation aus dem Fernsehausstrahlungssignal.

Für die Übertragung von Fernsehsendungen zum Zuschauer stehen unterschiedliche Übertragungswege zur Verfügung, nämlich die terrestrische Übertragung mittels erdgebundenen Sendestation und Dachantenne, die Satellitenübertragung und die Übertragung über Breitbandkabel sowie Telefonkabel. Während jede dieser Übertragungsformen spezifische Vor- und Nachteile aufweist, besteht einer der wesentlichsten Unterschiede zwischen den genannten Übertragungsformen gegenwärtig darin, daß im hochfrequenten Satellitenübertragungsbereich ausreichende Kapazitäten zur Verfügung stehen, während bei der terrestrischen Übertragung und im Kabelnetz mittlerweile keine freien Kanäle mehr verfügbar sind.

Es wurden bereits eine Reihe von vorschlägen gemacht, um das Problem der begrenzten Verfügbarkeit terrestrischer Kanäle zu lösen. Eine Möglichkeit besteht darin, zu Senderfrequenzen im Mikrowellenbereich überzugehen, wodurch sich die Anzahl der übertragbaren Kanäle erhöhen läßt. Ein Nachteil dieses unter dem Begriff Microwave Multipoint Distribution System (MMDS) bekannten Vorschlags besteht jedoch darin, daß die Reichweite von im Mikrowellenbereich arbeitenden Sendern verhältnismäßig gering ist, so daß eine Vielzahl von Sendern erforderlich werden.

Eine weitere Möglichkeit zur Erhöhung der Anzahl von terrestrisch übertragbaren Programmen besteht in der anvisierten Verwendung digitaler Fernsehübertragungsverfahren. Der Grund hierfür ist im wesentlichen darin zu sehen, daß sich durch moderne digitale Codier- und Datenkompressionstechniken der für die Aussendung eines Fernsehprogramms benötigte Frequenzbereich deutlich reduzieren läßt. Während jedoch bei der Fernsehübertragung via Satellit und Breitbandkabel digitale Übertragungstechniken bereits eingeführt wurden oder kurz vor der Einführung stehen, ist die Einführung der digitalen Übertragung über terrestrische Strecken auch in den nächsten Jahren noch unsicher, da die terrestrische Übertragung technisch anspruchsvoll ist und Standardisierungsfragen derzeit noch nicht hinreichend eindeutig beantwortet sind. Nachteilig ist zudem, daß zum Empfang von digitalen Fernsehsignalen neue Fernsehgeräte oder zumindest Zusatzgeräte benötigt werden, die für den Anwender Mehrkosten mit sich bringen.

In der digitalen Videotechnik wurde zur Erhöhung der übertragbaren Informationsmenge bereits vorgeschlagen, bei einem digitalisierten Fernsehsignal die in der Austastlücke erhaltenen Abtastdaten durch Zusatzinformation, wie beispielsweise digitale Audiosignale, zu ersetzen und dadurch die Übertragung von zusätzlicher Information zu ermöglichen (Ulrich Schmidt, Digitale Videotechnik, Franzis Verlag, Feldkirchen, 1996, Seiten 180-182; DE-A-195 44 582).

EP-A-710 022 beschreibt die Einlagerung von digitaler Nutzinformation in einem analogen Signal, wobei ein die Nutzinformationen enthaltendes Ausstrahlungssignal erhalten wird. Es beschreibt weiter eine Vorrichtung zum Empfangen eines gesendeten analogen Ausstrahlungssignals, mit einer Dekodiereinrichtung zum Abtrennen der Nutzinformation von dem Bildsignal unter Zuhilfenahme der Verwaltungsinformation.

Aufgabe der vorliegenden Erfindung ist es, ein Verfahren anzugeben, das es ermöglicht, im Rahmen der herkömmlichen, analogen Fernsehübertragungstechnik eine möglichst große nutzbare Informationsmenge zu übertragen und damit insbesondere im Hinblick auf die beschriebenen Kapazitätsprobleme bei der analogen terrestrischen Übertragung von Fernsehsignalen eine Abhilfe zu schaffen. Weitere Ziele der vorliegenden Erfindung bestehen darin, eine Vorrichtung zur Decodierung eines gemäß einem derartigen Verfahren bearbeiteten, analogen Ausstrahlungssignals sowie eine Vorrichtung zum Senden eines nach dem Verfahren erzeugten Ausstrahlungssignals zu schaffen.

Der erste Teil dieser Aufgabe wird erfindungsgemäß durch die im Anspruch 1 angegebenen Verfahrensschritte gelöst. Das erfindungsgemäße Verfahren beruht auf der Erkenntnis, daß nicht die gesamte, im Bildaufzeichnungssignal enthaltene Bildinformation von einem Betrachter zur Auswertung des Fernsehbilds benötigt wird. Aus dieser Erkenntnis heraus ist der Gedanke entstanden, den nicht benötigten Teil der Bildinformation, also die kaum oder gar nicht physiologisch wahrnehmbare Feinstruktur des Fernsehbilds durch nichtreversible Kompression und anschließende Dekompression des Bildaufzeichnungssignals zu eliminieren, also eine Datenreduktion vorzunehmen, und in den so gewonnenen Freiraum Nutz- und Verwaltungsinformationen einzulagern. Beispielsweise kann es sich bei der abtrennenden Feinstruktur um eng benachbarte und für den Betrachter selbst bei äußerster Konzentration kaum unterscheidbare Farb- oder Helligkeitstöne des Rasens handeln, der bei einer Sportübertragung den Bildhintergrund darstellt.

Der Vorteil dieser Erfindung besteht darin, daß hierdurch eine besonders große Menge an zusätzlicher Nutzinformation übertragen werden kann. Da das aus dem reduzierten Bildsignal und der eingelagerten Nutzinformation gebildete Ausstrahlungssignal ein analoges Signal ist und auf analoge Weise gesendet wird, kann es weiterhin von einem herkömmlichen, analogen Fernsehgerät ohne Zusatzeinrichtung empfangen, verarbeitet und dargestellt werden. Die Nutzinformation kann mit Hilfe eines Zusatzgeräts, wie beispielsweise eines PC oder einer Set-Top-Box, wiedergewonnen und zusätzlich mit dem übertragenen Fernsehbild ausgewertet werden. Besonders große zusätzliche Datenmengen können dann übertragen werden, wenn - was nach einer bevorzugten Ausführung der Erfindung vorgesehen ist - die Nutzinformation und die Verwaltungsinformation vor ihrer Einlagerung komprimiert werden, wobei die Art und die Durchführung der Kompression in Abhängigkeit von dem Nutzinformationsinhalt und/oder der Nutzungsform erfolgt.

Bei der Übertragungen von Sendungen in Breitbildformaten (16:9 Bildformat oder die Bildformate von Breitwand- oder Cinemascope-Filmen) werden dem abgestrahlten Fernsehsignal gegenwärtig schwarze Streifen am unteren und oberen Bildrand zugesetzt, damit diese Sendungen auch von Fernsehgeräten des alten 4:3 Formats empfangen werden können. In diesem Fall ist es möglich, daß der ersetzte Teil der Bildinformation mindestens einem der am unteren oder oberen Bildrand zugesetzten schwarzen Streifen entspricht.

Bei der eingefügten Nutzinformation kann es sich grundsätzlich um jede Art von Information handeln, wobei insbesondere auch die Übermittlung von weiteren Fernsehprogrammen von großem praktischen Interesse ist. Insofern besteht in einer bevorzugten Ausgestaltung des erfindungsgemäßen Verfahrens die Nutzinformation aus mindestens einem weiteren Fernsehprogramm.

Wenn das weitere Fernsehprogramm für den Empfang mit einem Taschenfernsehgerät vorgesehen ist, kann aufgrund des kleinen Bildschirms eine relativ geringe Bildqualität hingenommen werden. In diesem Fall ist eine verhältnismäßig hohe Kompression der Nutzinformation mit einem Kompressionsfaktor von über 50 bevorzugt, was es ermöglicht, eine große Anzahl derartiger Fernsehprogramme zu übertragen.

In einer weiteren bevorzugten Ausgestaltung des erfindungsgemäßen Verfahrens wird die Nutzinformation zum Schutz gegen unbefugten Gebrauch einer Verschlüsselungscodierung unterzogen. Dabei kann der Sicherungsgrad zweckmäßigerweise in Abhängigkeit von der Art der eingelagerten Nutzinformation gewählt werden.

Nach einer vorteilhaften Ausgestaltung des erfindungsgemäßen Verfahrens wird die Verwaltungsinformation auf ein zu übertragendes i-tes Bild einer Abfolge von Fernsehbildern aufgeprägt, die zur Entschlüsselung eines i+k-ten Bildes erforderlich ist, wobei k vorzugsweise größer 0, insbesondere 1, ist.

Der zweite Teil der Aufgabe wird erfindungsgemäß durch eine Vorrichtung gelöst, die durch eine Dekodiereinrichtung zum Abtrennen der Nutzinformation von dem im Ausstrahlungssignal enthaltenen reduzierten Bildsignal unter Zuhilfenahme der senderseitig eingelagerten Verwaltungsinformation gekennzeichnet ist, die die Anzahl der jeweils abzutrennenden niedrigwertigsten Bits aus dem Ausstrahlungssignal angibt. Diese Vorrichtung kann als Zusatzgerät, beispielsweise ein PC oder eine Set-Top-Box ausgebildet sein.

Soweit es die Vorrichtung zur Durchführung des Verfahrens angeht, hat sie erfindungsgemäß die im Anspruch 22 angegebenen Merkmale, wobei eine bevorzugte Ausführungsform darin besteht, daß zusätzlich eine Kompressionseinrichtung zur Komprimierung der Nutzinformation vor ihrer Einlagerung aufweist. Dabei können die einzelnen Teile der Vorrichtung auch unabhängig voneinander vorhanden sein, d. h. sie müssen nicht räumlich zusammengefaßt sein.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung näher erläutert; in dieser zeigt

Figur 1    eine schematische Darstellung der herkömmlichen analogen Übertragungsweise eines Fernsehsignals;

Figur 2    eine schematische Darstellung eines Ausführungsbeispiels des erfindungsgemäßen Verfahrens auf der Senderseite;

Figur 3    eine schematische Darstellung eines Ausführungsbeispiels des erfindungsgemäßen Verfahrens auf Empfängerseite;

Figur 4    eine detaillierte schematische Darstellung der Dateneinlagerung auf Senderseite und

Figur 5    eine schematische Darstellung der den Bildhintergrund charakterisierenden Terrassenstruktur.

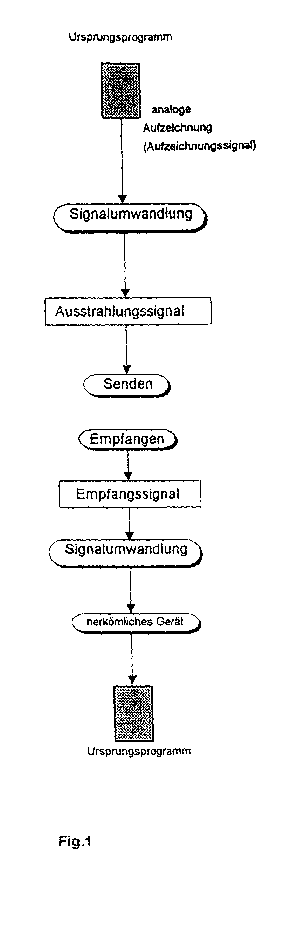

Figur 1 zeigt in schematischer Weise die Übertragung eines Fernsehprogramms bei der herkömmlichen analogen terrestrischen Übertragung. Die Aufzeichnung der Fernsehsendung (d.h. des Ursprungsprogramms) erfolgt in analoger oder digitaler Form. Durch eine Reihe von in der Technik bekannten, in Fig. 1 nicht näher spezifizierten Signalumwandlungsschritten wird das bei der Aufzeichnung erhaltene Aufzeichnungssignal in ein analoges Ausstrahlungssignal gewandelt und im Analogbetrieb von einem terrestrischen Sender gesendet. Der Empfang des gesendeten Ausstrahlungssignals erfolgt in der üblichen Weise über eine Dachantenne und einen an diese angeschlossenen herkömmlichen Fernsehempfänger.

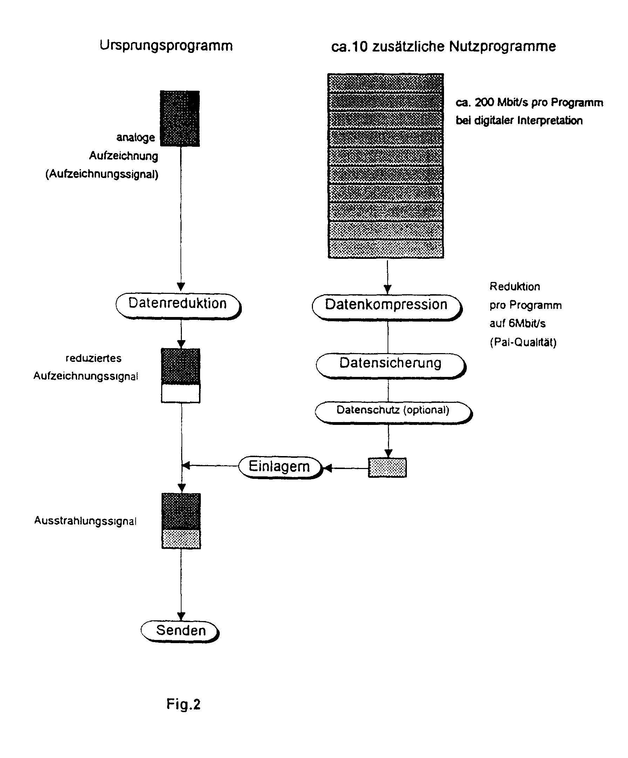

Figur 2 zeigt ein Ausführungsbeispiel zur Erläuterung der Erfindung, soweit sie die Senderseite betrifft. Wie aus Figur 2 erkennbar, erfolgt auch hier eine Aussendung eines analogen Ausstrahlungssignals, das mit einem herkömmlichen Fernsehempfänger empfangen werden kann. Das in Figur 2 dargestellte Ausstrahlungssignal unterscheidet sich jedoch von dem in Figur 1 gezeigten Ausstrahlungssignal dadurch, daß es zusätzliche Nutz- und Verwaltungsinformation enthält, die vor der Aussendung in das Signal eingelagert wurden. Der Datenreduktionsschritt und der Einlagerungsschritt bewirken somit das erfindungsgemäße Ersetzen eines Teils des ursprünglichen Bildaufzeichnungssignals durch Nutz- und Verwaltungsinformation. Da diese Daten dem ursprünglichen Bildaufzeichnungssignal nicht zusätzlich hinzugefügt werden, sondern einen Teil des ursprünglichen Bildaufzeichnungssignals ersetzten, wird die Bandbreite des Ausstrahlungssignals durch das Hinzufügen dieser Information nicht vergrößert.

Vor der Datenreduktion wird das Bildaufzeichnungssignal zunächst in nicht dargestellter Weise digitalisiert, wodurch ein codiertes Bildaufzeichnungssignal erhalten wird, das die Bilddarstellung mit Hilfe von Binärzahlen beschreibt, wobei diese Zahlen jedem Bildpunkt (Pixel) Informationen hinsichtlich der Grau- und/oder Farbwerte des betreffenden Bildpunktes zuordnen. Die Binärzahlen weisen im vorliegenden Ausführungsbeispiel für alle Bildpunkte eine feste Länge von 8 Bits auf.

Das codierte Bildaufzeichnungssignal kann auf die folgende Weise gewonnen werden: Der ursprüngliche Amplitudenwert $A_i$ des i-ten Bildpunktes der m-ten Zeile wird mit einem zeilenspezifischen Amplitudenwert $A_m$ verglichen (geeicht), der als Mittelwert aus mehreren bekannten Amplitudenwerten $A_i$ ermittelt wird. Jedem Bildpunkt wird dann ein Wert gemäß dem Quotienten $r_i = A_i/A_m$ zugeordnet und als Binärzahl $r_i = (b_1, b_2, ..., b_8)$ einer Länge von 8 Bits dargestellt.

Das codierte Bildaufzeichnungssignal wird für die nachfolgende Datenreduktion verwendet. Diese wird in folgender Weise durchgeführt: Die niedrigwertigsten Bits des codierten Bildaufzeichnungssignals sind für die Bilddarstellung nur von untergeordneter Bedeutung, da sie entweder Zufallsinformation tragen oder der "Feinstruktur" des Bildes entsprechen, die vom Betrachter in der Praxis jedoch nicht wahrgenommen werden kann. Deshalb werden einige der niederwertigsten Bits, z. B. $b_6$, $b_7$, $b_8$, einer Binärzahl abgetrennt. Ihre Anzahl kann von Pixel zu Pixel variieren. Ihre Bestimmung wird weiter unten beschrieben.

Die Einlagerung der Nutz- und Verwaltungsinformation wird dann dadurch realisiert, daß die abgetrennten letzten Bits $b_6$, $b_7$ und $b_8$ durch neue Bits $b_6'$, $b_7'$ und $b_8'$ ersetzt werden, die der einzulagernden Nutzinformation entsprechen. Die auf diese weise erzeugte neue Binärzahl wird mit $r_i'$ bezeichnet. Anschließend wird das analoge Ausstrahlungssignal in einer in Figur 2 nicht dargestellten Weise gemäß der Beziehung $A_i' = A_m * r_i'$ ermittelt, wobei $A_i'$ den Amplitudenwert des analogen Ausstrahlungssignals bezüglich des i-ten Bildpunktes in der m-ten Zeile bezeichnet. Das analoge Ausstrahlungssignal trägt somit sowohl die Bildinformation des auszustrahlenden analogen Fernsehprogramms (Ursprungsprogramms) als auch die aufgeprägte Nutz- und Verwaltungsinformation in sich.

Die Nutzinformation kann weitere Fernsehprogramme in PAL-Qualität enthalten. Bei der in Fig. 2 dargestellten Ausführungsform umfaßt das Nutzsignal 10 weitere Fernsehprogramme. In entsprechender Weise ist es aber auch möglich, daß die Nutzinformation Firmenprogramme, die als Textinformation wenig Platz beanspruchen, oder auch Zusatzinformation beinhaltet, mit der das übertragene Fernsehbild in ein höherwertigeres Bild gewandelt werden kann.

Sofern die Nutzinformation nicht bereits als Digitalsignal vorliegt, erfolgt zunächst eine Digitalisierung desselben. Anschließend erfolgt eine Kompression der digitalen Nutzinformation von 200 Mbit/s auf 6 Mbit/s. Dies entspricht einem Kompressionsverhältnis von etwa 33, bei welchem das komprimierte Signal noch zum Aufbau eines Bildes mit PAL-Qualität ausreichend ist. Mit der Kompression der Nutzinformation können verschiedene Ziele verfolgt werden: Zunächst wird zumeist eine möglichst große Datenreduzierung angestrebt werden. Zusätzlich wird die Nutzinformation durch kryptographische Verfahren gegen unbefugte Benutzung des Signals geschützt. Darüber hinaus kann auch eine datenart-spezifische Datensicherung der Nutzinformation erzielt werden, indem beispielsweise Bildinformationen mit einem niedrigeren Sicherungsgrad als Textinformationen und diese wiederum mit einem niedrigeren Sicherungsgrad als Zahleninformation mit Hilfe bekannter Fehlererkennungs- oder Korrekturverfahren abgesichert wird.

Die Kompression des Bildaufzeichnungssignals wie auch der Nutz- und Verwaltungsinformation kann in vielfältiger Weise ausgeführt werden. Zum einen können zur Kompression bereits eingeführte und normierte Codier-Algorithmen zum Einsatz kommen. Für Bewegtbildinformation kann beispielsweise eine Codierung nach dem MPEG1 (ISO 1117292/11) oder MPEG2 Standard (ISO 1318194/11) oder auch höherem MPEG-Standard verwendet werden. MPEG2 stellt die modernere Variante dar und verarbeitet z.B. Standard-TV-Signale in Vollbild- oder Halbbildformat verschiedener Auflösungsstufen und Audioinformation. Ist die Information ein Standbild, kann eine Codierung nach dem JPEG Standard (ANSI 10981-1) verwendet werden. Auch hier existieren unterschiedlich mächtige Versionen, die bei der vorliegenden Erfindung entsprechend dem konkreten Anwendungsfall zum Einsatz kommen können. Für Textinformation bieten sich verschiedene Huffman-/modified Huffman Codierverfahren und auch alle weiteren Codierverfahren an.

Zum anderen können zur Codierung des Nutzsignals auch nicht normierte, aber anderweitig bereits als besonders wirksam bekannte Verfahren verwendet werden. Beispiele hierfür sind die auf Wavelet- oder Fractalkompression beruhenden Codierverfahren. Bei diesen Verfahren ist zu beachten, daß sie häufig einen hohen Rechenaufwand für die Codierung und Decodierung erfordern. Deshalb ist bei Verwendung solcher Verfahren die verfügbare Rechnerleistung zu berücksichtigen sowie die Frage zu klären, ob die Codierung bzw. Decodierung in Realzeit erfolgen muß oder nicht.

Da auf der Senderseite eine wesentlich höherer Rechenaufwand vertretbar ist als auf der Empfängerseite, kommen für die vorliegende Erfindung insbesondere auch asymmetrische Codierverfahren in Betracht. Asymmetrische Codierverfahren weisen einen (senderseitig) hohen Rechenaufwand für die Codierung und einen vergleichsweise niedrigen (empfänger-seitigen) Rechenaufwand für die Decodierung auf.

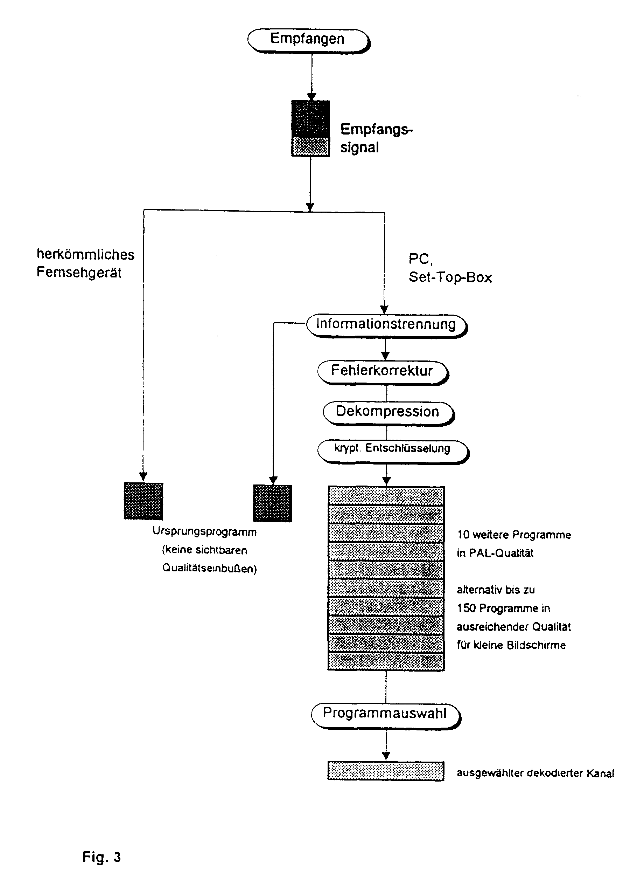

Figur 3 zeigt das Verfahren zum Empfangen des nach dem vorstehenden Verfahren hergestellten und ausgesendeten analogen Ausstrahlungssignals sowie die hierfür empfängerseitig vorgesehene Einrichtung.

Das Empfangssignal (d. h. das Ausstrahlungssignal) wird beispielsweise durch eine Dachantenne aufgenommen und zur Wiedergewinnung der eingelagerten Nutzinformation einem PC oder einer Set-Top-Box zugeführt. Die Wiedergewinnung der eingelagerten Nutzinformation erfolgt im wesentlichen durch Verfahrensschritte, die den Schritten zur Bildung des Ausstrahlungssignals entsprechen und in umgekehrter Abfolge ausgeführt werden. Im wesentlichen wird ggfs. nach einer Analog-Digital-Wandlung des Empfangssignals sowie einer ggfs. erforderlichen Entschlüsselung desselben die Nutzinformation aus dem Empfangssignal abgetrennt und decodiert. Im vorliegenden Beispiel umfaßt die abgetrennte Nutzinformation gemäß Figur 3 eine Anzahl von 10 Programmen, die neben dem direkt aus dem Empfangssignal gewonnenen Ursprungsprogramm verfügbar sind.

Die Empfangseinrichtung umfaßt neben einer Antenne einen PC und/oder eine Set-Top-Box mit nachgeschaltetem herkömmlichen Fernsehgerät. Das Ursprungsprogramm sowie die 10 weiteren Programme können dann wahlweise über den PC oder das Fernsehgerät empfangen werden. Die Set-Top-Box ist zur Decodierung des Empfangssignals mit einem Spezial-Chip versehen. Hierfür sind bekannte Spezialchips (als MPEG-Codierer/Decodierer) nach entsprechender Anpassung geeignet. In Zukunft können auch neu entwickelte Chips mit eventuell anderen Kompressionsverfahren zum Einsatz kommen. Für PC's eignen sich insbesondere die in der Technik bekannten MMX-Prozessoren. Ohne PC bzw. Set-Top-Box kann mit dem Fernsehgerät lediglich das Ursprungsprogramm empfangen werden.

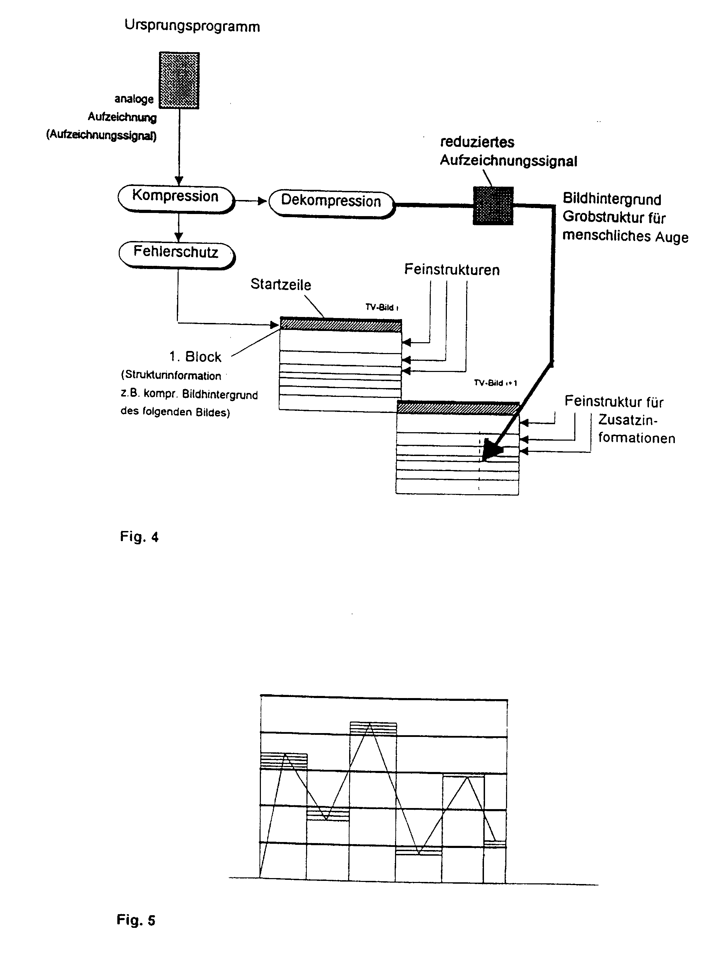

Figur 4 zeigt in detaillierter Form die Dateneinlagerung bei dem zu Figur 2 beschriebenen Verfahren. Das Bildaufzeichnungssignal wird zur Datenreduktion einer Kompression und anschließender Dekompression unterzogen. Der dabei auftretende Datenverlust ist beabsichtigt und dient zur Beseitigung der für den Betrachter nicht wahrnehmbaren Feinstruktur. Das nach der Dekompression vorliegende reduzierte Bildaufzeichnungssignal enthält somit die für das menschliche Auge wahrnehmbare Grobstruktur des Bildes, die im folgenden auch als Bildhintergrund bezeichnet wird.

In Figur 5 ist in schematischer Weise ein Ausschnitt der Grobstruktur eines Bildes dargestellt. Die Höhe der gezeigten Plateaus entspricht den Amplitudenwerten des gemäß Figur 4 erhaltenen, reduzierten Aufzeichnungssignals. Die im oberen Bereich der Plateaus eingezeichneten Amplitudenbereiche deuten die Amplitudenvariationen von in diesem Bereich entfernter bzw. neu eingelagerter Feinstruktur an, und die durchgezogene Linie entspricht der Wahrnehmung der von den Plateaus gebildeten sogenannten Terrassenstruktur durch das menschliche Auge. Die Terrassenstruktur kann durch Kennzahlen definiert werden, die für den Speicherplatzbedarf des Bildhintergrundes charakteristisch sind. Eine mögliche Kennzahl K für diesen Platzbedarf läßt sich z. B. durch die folgende Gleichung ausdrücken:

$$K = [\log_2 ((\text{Amplitudenwert Pixel} / \text{Amplitudenwert Schwarzschulter}) * 191)]$$

In Figur 4 ist eine Abfolge von zwei TV-Bildern i sowie i+1 gezeigt. Bei einer möglichen Struktur einer Bildseite wird die oberste Zeile jedes Bildes als Startzeile bezeichnet und ist in Figur 4 als schwarzer Balken dargestellt. Sie enthält Verwaltungsdaten, die zum Start des empfängerseitigen Decodiervorgangs beim Einschalten und nach Bildzusammenbrüchen benötigt werden. Die Startzeile darf keine Bildhintergrundinformation enthalten. Alle folgenden Blöcke enthalten sowohl die Primärdaten als auch die aufgeprägten Verwaltungs- oder Nutzinformationsdaten.

Dabei enthält der erste dieser Blöcke, der in Fig. 4 schraffiert dargestellt ist, weitere Verwaltungsdaten, die zur Trennung der Information des nächsten Bildes dienen und dessen Zerlegbarkeit in Hintergrund- und Nutzinformation widerspiegeln. Hierfür stehen eine Reihe von Möglichkeiten zur Verfügung, von denen in beispielhafter Weise nachfolgend zwei angegeben sind:

Eine erste Möglichkeit besteht darin, in diesem ersten Block (bezüglich des i-ten Bildes) den kompletten Bildhintergrund (d.h. die komplette Terrassenstruktur) des nächsten, i+1-ten Bildes in komprimierter Form zu speichern. Eine zweite Möglichkeit besteht darin, nur die Kennzahlen K der Terrassenstruktur zu speichern. Sowohl die Terrassenstruktur als auch die Kennzahlen K können sich auf Einzelpixel oder auf größere Bildbereiche beziehen. Die beschriebenen Datenkompressionen für die einzulagernde Nutzinformation, Verwaltungsinformation und der Aufzeichnungsinformation (Bildung der Terrassenstruktur zur Platzbeschaffung) sind voneinander unabhängig und können jeweils auf verschiedenen Verfahren, z.B. JPEG, Fractalkompression, Wavelet-Verfahren usw. beruhen.

Die Beziehung zwischen einem beliebigen i-ten und einem nachfolgenden i+1-ten Bildes - es muß nicht unmittelbar folgen - stellt sich wie folgt dar. Das i+1-te Bild der Bildfolge wird mit Daten verarbeitet, die aus dem i-ten Bild gewonnen werden. Diese Daten sind die aus dem i-ten Bild abgetrennten Daten der Terrassenstruktur in dekomprimierter Form. Gemäß der vorstehend beschriebenen ersten Möglichkeit handelt es sich hierbei um die den kompletten Hintergrund des i+1-ten Bildes darstellenden Daten, während es sich gemäß der zweiten beschriebenen Möglichkeit lediglich um die für den Platzbedarf charakteristischen Kennzahlen der Terrassenstruktur handelt.

In beiden Fällen kann eine vollständige Trennung von Hintergrund- und Nutzinformation erzielt werden. Dies geschieht auf die folgende Weise:

Die komprimierten Nutzinformationen der einzelnen zusätzlich ausgestrahlten Programme sind an bestimmten Stellen des TV-Bildes kodiert. Beispielsweise kann der 4-te zusätzlich ausgestrahlte Kanal in den Zeilen 37 bis 92 kodiert sein. Die Kenntnis dieser Stellen kann z. B. der Startzeile entnommen werden. Die nachfolgende Decodierung wird dann nur für den interessierenden Kanal (hier: Kanal 4) durchgeführt. Bei der Decodierung wird zunächst für jeden Bildpunkt die Amplitude des i+1ten Bildes in digitaler Darstellung, d.h. als Binärzahl, ermittelt. Bei der ersten Möglichkeit wird dann von dieser Binärzahl der entsprechende Digitalwert aus der Terrassenstruktur für den Kanal 4 subtrahiert. Es ergibt sich ein Digitalwert, der den aufgeprägten Binärwert der Nutzinformation darstellt. Bei der zweiten Möglichkeit wird dieser Digitalwert gemäß folgender Gleichung unter Verwendung der Kennzahl "K" ermittelt:

$$\text{Digitalwert} = (x/2^{K'} - Y) * 2^{K'}$$

mit:    K' = 8 - K und Y = ganze Zahl von $x/2^{K'}$

Die erhaltenen Digitalwerte bilden den Datenstrom der zu dekodierenden Nutzinformation, d.h. hier des zusätzlichen Fernsehprogramms auf Kanal 4. Der Datenstrom liegt in komprimierter Form vor und wird im Zuge der weiteren Bearbeitung dekomprimiert, nach ggfs. erfolgter Fehlerkorrektur von Redundanzen befreit und dann eventuell noch einer Wandlung unterzogen, um entsprechend seiner Datenart als Bild-, Text oder Audiosignale verwendet werden zu können.

Beim Einschalten oder nach einem Bildzusammenbruch tritt folgende Besonderheit auf. In beiden Fällen wird zunächst die Information der ersten Zeile (Startzeile) benötigt. Da man zu diesem Zeitpunkt keine weitere Information zur Trennung von Hintergrund- und Nutzinformation zur Hand hat, darf hier keine Nutzinformation aufgeprägt sein.

Die Startzeile enthält in komprimierter Form Information über einen Teil (beispielsweise der ersten 10 Zeilen) der Terrassenstruktur des zweiten Bildes, mit deren Hilfe wiederum der gesamte komprimierte Block im dritten Bild dekodiert werden kann. Das vierte Bild läßt sich dann komplett entschlüsseln.

Alle vorstehend beschriebenen Ausführungsbeispiele und Varianten haben gemeinsam, daß sie auf der Übertragung eines analogen Signals mit eingelagerter komprimierter digitaler Nutzinformation basieren. Der für diese Hybridübertragung vorgesehene Übertragungsweg ist dabei nicht auf die terrestrische Übertragung von Fernsehsignalen beschränkt, sondern umfaßt beispielsweise auch die analoge Übertragungsform über Breitbandkabel.

**Patentansprüche**

1. Verfahren zur Erzeugung eines Fernsehausstrahlungssignals aus einem Bildaufzeichnungssignal, das folgende Verfahrensschritte umfaßt:

   a) Digitalisierung des aufgenommenen Bildaufzeichnungssignals;

   b) Kompression des digitalisierten Bildaufzeichnungssignals mit nichtreversiblen Kompressionsverfahren;

   c) Dekompression des durch Schritt b) komprimierten Bildaufzeichnungssignals;

   d) Vergleich des so erhaltenen Bildsignals mit dem durch Schritt a) gewommen Bildaufzeichnungssignal unter Erfassung der bei der Kompression beseitigten Feinstruktur des Bildaufzeichnungssignals;

   e) Einlagerung von digitaler bzw. digitalisierter Nutzinformation und von digitaler Verwaltungsinformation an die Stellen der beseitigten Feinstruktur, wobei ein die Nutzinformationen enthaltendes Ausstrahlungssignal erhalten wird;

   f) Umwandlung des digitalen in das analoge Fernsehausstrahlungssignal.

2. Verfahren nach Anspruch 1, **dadurch gekennzeichnet, daß** auch die Nutzinformation und die Verwaltungsinformation vor ihrer Einlagerung komprimiert werden.

3. Verfahren nach Anspruch 2, **dadurch gekennzeichnet, daß** die Art und die Durchführung der Kompression der Nutzinformation in Abhängigkeit von deren Inhalt und/oder deren Form erfolgt.

4. Verfahren nach einem der Ansprüche 1 bis 3, **dadurch gekennzeichnet, daß** die Nutzinformation und die Verwaltungsinformation in einen schwarzen Bildstreifen am oberen und/oder unteren Bildrand eingelagert werden.

5. Verfahren nach Anspruch 1, **dadurch gekennzeichnet, daß** die Nutzinformation und die Verwaltungsinformation in die Austastlücken eingelagert wird.

6. Verfahren nach einem der vorhergehenden Ansprüche, **dadurch gekennzeichnet, daß** es sich bei der Nutzinformation um Textinformation, Audio-Information, Firmeninformation, mindestens ein weiteres Fernsehprogramm und/oder um zusätzliche Bildinformation handelt, mittels der das Bild des übertragenden Fernsehprogramms in ein höherwertiges Bild gewandelt wird.

7. Verfahren nach einem der vorhergehenden Ansprüche, **dadurch gekennzeichnet, daß** der Schritt des Einlagerns der Nutzinformation und der Verwaltungsinformation im Rahmen einer digitalen oder auch analogen Signalbearbeitung ausgeführt wird.

8. Verfahren nach einem der vorhergehenden Ansprüche, **dadurch gekennzeichnet, daß** die Nutz- und Verwaltungsinformationen durch Fehlerschutzroutinen mit Redundanz versehen sind, wobei die Verwaltungsinformation eine höhere Redundanz erhält.

9. Verfahren nach einem der vorhergehenden Ansprüche, **dadurch gekennzeichnet, daß** zur Kompression ein Algorithmus nach einem MPEG Standard und/oder nach dem JPEG Standard, ein auf einem Huffman-Codierverfahren basierender Algorithmus und/oder Codierverfahren, das beispielsweise auf Wavelet- oder Fractalkompression beruht, verwendet wird.

10. Verfahren nach einem der vorhergehenden Ansprüche, **dadurch gekennzeichnet, daß** die Kompression in Echtzeit erfolgt.

11. Verfahren nach einem der vorhergehenden Ansprüche, **dadurch gekennzeichnet, daß** zumindest die Verwaltungsinformation zum Schutz gegen unbefugten Gebrauch einer Verschlüsselungscodierung unterzogen wird.

12. Verfahren nach Anspruch 11, **dadurch gekennzeichnet, daß** der Sicherungsgrad der Verschlüsselungscodierung abhängig von der Art der zu übertragenden Nutzinformation ist.

13. Verfahren nach einem der vorhergehenden Ansprüche, **dadurch gekennzeichnet, daß** die Verwaltungsinformation bezüglich jeder Bildseite die Anzahl der jeweils abzutrennenden Bits des codierten Ausstrahlungssignals angibt.

14. Verfahren nach einem der vorhergehenden Ansprüche, **dadurch gekennzeichnet, daß** die Verwaltungsinformation einem i-ten Bild einer Abfolge von Fernsehbildern aufgeprägt wird, die zu der Entschlüsselung eines i+k-ten Fernsehbildes erforderlich ist.

15. Verfahren nach Anspruch 14, **dadurch gekennzeichnet, daß** die Verwaltungsinformation des i-ten Bildes den kompletten Bildhintergrund des i+k-ten Bildes enthält.

16. Verfahren nach Anspruch 15, **dadurch gekennzeichnet, daß** die Verwaltungsinformation des i-ten Bildes Kennzahlen enthält, die für den Speicherplatzbedarf des Bildhintergrundes des i+k-ten Bildes charakteristisch sind.

17. Verfahren nach einem der Ansprüche 14 bis 16, **dadurch gekennzeichnet, daß** an einer festen Stelle, insbesondere in einer Startzeile eines jeden zu übertragenden Fernsehbildes Information enthalten ist, die angibt, welchem Bildbereich des zu übertragenden Fernsehbildes ein bestimmter Teil der Nutzinformation aufgeprägt ist.

18. Vorrichtung zum Empfangen eines nach dem Verfahren des Anspruchs 1 gesendeten analogen Ausstrahlungssignals, **gekennzeichnet durch** eine Dekodiereinrichtung zum Abtrennen der Nutzinformation von dem Bildsignal unter Zuhilfenahme der Verwaltungsinformation, wobei die Verwaltungsinformation die Anzahl der jeweils abzutrennenden niedrigwertigsten Bits aus dem Ausstrahlungssignal angibt.

19. Vorrichtung nach Anspruch 18, **dadurch gekennzeichnet, daß** ein Analog-Digital-Wandler zur Wandlung des analogen Ausstrahlungssignals in ein erstes Digitalsignal, sowie ein Prozessor zum Verarbeiten des ersten Digitalsignals und Berechnen eines die Nutzinformation enthaltenden zweiten Digitalsignals vorgesehen ist.

20. Vorrichtung nach Anspruch 19, **dadurch gekennzeichnet, daß** der Prozessor die Nutzinformation durch Abtrennen von niedrigwertigsten Bits aus dem ersten Digitalsignal berechnet.

21. Vorrichtung nach einem der Ansprüche 19 oder 20, **dadurch gekennzeichnet, daß** es sich bei dem Prozessor um einen MMX-Prozessor oder um einen Spezialchip handelt.

22. Vorrichtung nach einem der Ansprüche 18 bis 21, **dadurch gekennzeichnet, daß** es sich bei der Vorrichtung um einen PC oder um eine an ein Fernsehgerät anschließbare Set-Top-Box handelt.

23. Vorrichtung zur Durchführung des Verfahrens gemäß einem der Ansprüche 1 bis 17, **gekennzeichnet durch** folgende Merkmale:

a) eine Digitalisierungseinrichtung zur Digitalisierung des aufgenommenen Bildaufzeichnungssignals;

b) eine Kompressions- und eine Dekompressionseinrichtung zur nichtreversiblen Komprimierung des Bildaufzeichnungssignals und dessen Dekompression;

c) einer Detektionseinrichtung zum Vergleich des so erhaltenden Bildsignals mit dem Bildaufzeichnungssignal zur Erfassung der bei der Kompression beseitigten Feinstruktur des Bildaufzeichnungssignals;

d) eine Einlagerungseinrichtung zur Einlagerung einer digitalen Nutzinformation und einer digitalen Verwaltungsinformation an die Stellen der Feinstruktur;

e) einen Digital-Analog-Wandler zum Umwandeln des so erhaltenen Ausstrahlungssignals;

f) eine Sendeeinrichtung zum Aussenden des analogen Ausstrahlungssignals.

24. Vorrichtung nach Anspruch 23, **dadurch gekennzeichnet, daß** ein Analog-Digital-Wandler zur Umwandlung eines die Nutzinformation enthaltenden analogen Nutzinformationssignals in ein digitales Nutzinformationssignal und ein Prozessor zum Verarbeiten des digitalen Bildaufzeichnungssignals und der digitalen Nutzinformation in ein digitales Ausstrahlungssignal vorgesehen ist.

25. Vorrichtung nach Anspruch 24, **dadurch gekennzeichnet, daß** der Prozessor das digitale Bildaufzeichnungssignal durch Abtrennen von niederwertigsten Bits und Ersetzen der abgetrennten Bits durch Bits des digitalen Nutzinformationssignals berechnet.

26. Vorrichtung nach Anspruch 24 oder 25, **dadurch gekennzeichnet, daß** der Prozessor eine Verschlüsselung zumindest des digitalen Verwaltungsinformationssignals durchführt.

27. Vorrichtung nach einem der Ansprüche 22 bis 26, **dadurch gekennzeichnet, daß** eine Kompressionseinrichtung zur Komprimierung der Nutz- und/oder Verwaltungsinformation vor ihrer Einlagerung vorgesehen ist.

## Claims

1. Method for producing a television transmission signal from an image recording signal which comprises the following methodical steps:

a: Digitalisation of the recorded image recording signal;

b: Compression of the digitalised image recording signal by way of non-reversible compression methods;

c: Decompression of the image recording signal which has been compressed by step b;

d: Comparison of a thus obtained image signal with the image recording signal obtained by step a whilst identifying the fine structure of the image recording signal disposed of during compression;

e: storage of digital or digitalised intelligence information and digital service information in places of disposed fine structure, whereby a transmission signal containing intelligence information is obtained;

f: conversion of the digital television transmission signal into the analog signal;

2. Method according to Claim 1, **characterised in that** the intelligence information and the service information are also compressed prior to being stored.

3. Method according to Claim 2, **characterised in that** the type and execution of compression of the intelligence information is carried out in dependency of their contents and/or their form.

4. Method according to one of Claims 1 to 3, **characterised in that** the intelligence information and the service information are stored in a black image strips at the upper and/or lower edge of an image.

5. Method according to Claim 1, **characterised in that** the intelligence information and the service information is stored in the blank gaps.

6. Method according to one of the above claims, **characterised in that** the intelligence information is text information, audio information, company information, at least one additional television programme and/or additional image information by means of which the image of a transmitted television programme is converted into a higher quality image.

7. Method according to one of the above claims, **characterised in that** the step of storing the intelligence information and the service information is carried out within digital or also analog signal processing.

8. Method according to one of the above claims, **characterised in that** the intelligence and service informations are by way of error protection routines provided with redundancy, and the service information is given a higher redundancy.

9. Method according to one of the above claims, **characterised in that** an algorithm according to an MPEG and/or JPEG standard, an algorithm based on a Huffman coding method and/or a coding method which is based for example on wavelet or fractal compression is used for compression.

10. Method according to one of the above claims, **characterised in that** the compression is carried out in real time.

11. Method according to one of the above claims, **characterised in that** at least the service information is subjected to encoding to protect from unauthorised use.

12. Method according to Claim 11, **characterised in that** the degree of safety of the encoding is dependent on the type of intelligence information to be transmitted.

13. Method according to one of the above claims, **characterised in that** the service information informs relative to each image page about the number of respective bits of the encoded transmission signal which have to be separated.

14. Method according to one of the above claims, **characterised in that** the service information is imprinted on an $i$ image of a succession of television images which is required for decoding an $i+k$ television image.

15. Method according to Claim 14, **characterised in that** the service information of the $i$ image contains the complete image background of the $i+k$ image.

16. Method according to Claim 15, **characterised in that** the service information of the $i$ image includes identification numbers which are characteristic for the storage space requirement of the image background of the $i+k$ image.

17. Method according to one of Claims 14 to 16, **characterised in that** at a fixed place, in particular a starting line of each television image to be transmitted is contained information which indicates which image range of a television image to be transmitted is imprinted with a specified section of the intelligence information.

18. Device for receiving an analog transmission signal sent by the method of Claim 1, **characterised by** a decoding device for separating the intelligence information from the image signal with the aid of the service information where the service information verifies the number of respective lowest-value bits to be separated from the transmission signal.

19. Device according to Claim 18, **characterised in that** an analog-digital converter is provided for converting the analog transmission signal into a first digital signal, and a processor is provided for processing the first digital signal and calculating a second digital signal which includes the intelligence information.

20. Device according to Claim 19, **characterised in that** the processor of the intelligence information is calculated by separating the lowest-value bits from the first digital signal.

21. Device according to one of Claims 19 or 20, **characterised in that** the processor is an MMX-processor or a special chip.

22. Device according to one of Claims 18 to 21, **characterised in that** the device is a PC or a set-top-box which is connectible to a television set.

23. Device for carrying out the method according to one of Claims 1 to 17, **characterised by** the following features:

    a: a digitalisation device for digitalisation of the recorded image recording signal;

    b: a compression device and a decompression device for non-reversible compression of the image recording signal and its decompression;

    c: a detection device for comparing a thus obtained image signal with the image recording signal for the purpose of identifying the fine structure of the image recording signal dispensed with during compression;

    d: a storing device for storing digital intelligence information and digital service information at the points of the fine structure;

    e: a digital-analog converter for conversion of a thus obtained transmission signal;

    f: a transmission device for transmitting the analog transmission signal.

24. Device according to Claim 23, **characterised in that** an analog-digital converter for conversion of an analog information signal which contains the intelligence information into a digital intelligence information signal and a processor for processing the digital image recording signal and the digital intelligence information into a digital transmission signal are provided.

**25.** Device according to Claim 24, **characterised in that** the processor calculates the digital image recording signal by separation of lowest-value bits and replacement of the separated bits by bits of the digital intelligence information signal.

**26.** Device according to Claim 24, or 25, **characterised in that** the processor decodes at least the digital service information signal.

**27.** Device according to one of Claims 22 to 26, **characterised in that** a compression device is provided for compression of the intelligence and/or service information prior to being stored.

**Revendications**

**1.** Procédé pour la production d'un signal de télévision de diffusion d'un signal d'écriture d'image, les étapes du procédé comprennent:

a) la digitalisation du signal d'écriture d'image prise;

b) la compression du signal d'écriture d'image numérisé avec un procédé de compression non réversible;

c) la décompression du signal d'écriture d'image compressé selon l'étape b;

d) la comparaison du signal d'image réceptionné avec le signal d'écriture d'image, gagné dans l'étape a sous l'enregistrement de la microstructure éliminée à la compression du signal d'écriture d'image;

e) le stockage de l'information d'utilisation numérique ou numérisée et de l'information d'exploitation numérique aux emplacement de la microstructure éliminée et un signal de diffusion contenant les renseignements d'utilisation reçu;

f) la transformation numérique dans un signal de diffusion analogique de télévision.

**2.** Procédé selon la revendication 1, **caractérisé en ce que** l'information d'utilisation et l'information d'exploitation sont aussi compressées avant leur stockage.

**3.** Procédé selon la revendication 2, **caractérisé en ce que** la manière et la réalisation de la compression de l'information d'utilisation résulte en fonction du contenu et / ou de la forme.

**4.** Procédé selon l'une des revendications 1 à 3, **caractérisé en ce que** l'information d'utilisation et l'information d'exploitation sont stockées dans un bandeau noir au bord d'image supérieur et / ou inférieur.

**5.** Procédé selon la revendication 1, **caractérisé en ce que** l'information d'utilisation et l'information d'exploitation est stockée dans les intervalles (de saisie)?.

**6.** Procédé selon l'une des revendications précédentes, **caractérisé en ce qu'**il s'agit par l'information d'utilisation d'information de texte, information audio, information de sociétés, au moins un autre programme de télévision et / ou de l'information d'image supplémentaire au moyen de quoi l'image du programme de télévision diffusée est modifiée dans une image de haute qualité.

**7.** Procédé selon l'une des revendications précédentes, **caractérisé en ce que** l'étape de stockage de l'information d'utilisation et de l'information d'exploitation, est accomplie aussi dans le cadre d'un traitement de signal numérique ou analogique.

**8.** Procédé selon l'une des revendications précédentes, **caractérisé en ce que** les renseignements d'utilisation et d'exploitation sont munis de protection de défaut de routage avec une redondance, et l'information d'exploitation reçoit une redondance plus élevée.

**9.** Procédé selon l'une des revendications précédentes, **caractérisé en ce qu'**à la compression d'un algorithme est utilisé le standard MPEG et/ou le standard JPEG, un algorithme se basant sur procédé de codage " Huffman " et / ou un procédé de codage qui est fondé, par exemple, sur "Wavelet " ou compression fractal.

**10.** Procédé selon l'une des revendications précédentes, **caractérisé en ce que** la compression résulte en temps réel.

**11.** Procédé selon l'une des revendications précédentes, **caractérisé en ce que** tout au moins l'information d'exploitation est soumise à la protection contre l'usage non autorisé d'un codage de chiffrage.

**12.** Procédé selon la revendication 11, **caractérisé en ce que** le degré de protection du codage de chiffrage est dépendant de la manière de diffusion de l'information d'utilisation.

**13.** Procédé selon l'une des revendications précédentes, **caractérisé en ce que** l'information d'exploitation donne la quantité des bits à chaque fois à séparer du signal de diffusion codé concernant chaque page d'image.

**14.** Procédé selon l'une des revendications précédentes, **caractérisé en ce que** l'information d'exploitation à une image dite dite i-10 (ten) d'un ordre est imprimée par les représentations de télévision qui est nécessaire au décodage d'une représentation de télévision dite dite i + k - 10 (ten).

**15.** Procédé selon la revendication 14, **caractérisé en ce que** l'information d'exploitation de l'image dite 1-10 (ten) contient le fond d'image complet de l'image dite i + k - 10 (ten).

**16.** Procédé selon la revendication 15, **caractérisé en ce que** l'information d'exploitation de l'image dite 1 - 10 (ten) contient les indices qui sont caractéristiques pour le besoin de la cellule de mémoire du fond d'image de l'image dite i + k - 10 (ten).

**17.** Procédé selon l'une des revendications 14 à 16, **caractérisé en ce qu'**à un emplacement défini, en particulier dans une ligne de départ à chaque représentation de télévision diffusée est contenue l'information qui donne à la zone d'image de la représentation de télévision diffusée une partie déterminée étant imprimée de l'information d'utilisation.

**18.** , Dispositif à l'accueil d'un signal de diffusion analogique diffusé selon la revendication 1, **caractérisé par** une installation de décodage pour séparer l'information d'utilisation du signal d'image sous l'utilisation de l'information d'exploitation et le re-travail de l'information donne chaque fois la quantité des bits de moindre valeur à séparer du signal de diffusion donné.

**19.** Dispositif selon la revendication 18, **caractérisé en ce qu'**un convertisseur analogique-numérique au changement du signal de diffusion analogique en un premier signal numérique ainsi qu'un processeur qui traite le premier signal numérique et qui comptabilise le deuxième signal numérique contenant l'information d'utilisation prévu.

**20.** , Dispositif selon la revendication 19, **caractérisé en ce que** le processeur comptabilise l'information d'utilisation en séparant les bits de moindre valeur du premier signal numérique.

**21.** Dispositif selon l'une des revendications 19 ou 20, **caractérisé en ce qu'**il s'agit pour le processeur d'un processeur de MMX ou d'une puce spéciale

**22.** Dispositif selon l'une des revendications 18 à 21, **caractérisé en ce qu'**il s'agit au dispositif d'un PC ou d'une boîte de branchement d'enregistrement pouvant être connectée à un téléviseur.

**23.** Dispositif pour la réalisation du procédé conforme à l'une des revendications 1 à 17, **caractérisé par** les signes suivants :

a) une installation de digitalisation pour la digitalisation du signal d'écriture d'image prise;

b) une installation de compression et une installation de décompression à la compression non réversible du signal d'enregistrement de l'image et sa décompression;

c) une installation de décodage à la comparaison du signal d'image reçu avec le signal d'écriture d'image à l'enregistrement, de la microstructure éliminée à la compression du signal d'écriture d'image;

d) une installation pour le stockage d'une information d'utilisation numérique et d'une installation d'exploitation numérique aux emplacement de la microstructure;

e) un convertisseur analogique-numérique pour transformer le signal de diffusion reçu;

f) une installation d'émission pour envoyer le signal de diffusion analogique.

**24.** Dispositif selon la revendication 23, **caractérisé en ce qu'**un convertisseur analogique-numérique est prévu pour la transformation d'un signal d'information d'utilisation analogique contenant l'information d'utilisation dans un signal d'information d'utilisation numérique et un processeur pour le traitement du signal d'écriture d'image numérique et de l'information d'utilisation numérique dans un signal de diffusion numérique.

**25.** Dispositif selon la revendication 24, **caractérisé en ce que** le processeur comptabilise le signal d'écriture d'image numérique en séparant les bits de moindre valeur et remplace les bits séparés par les bits du signal d'information d'utilisation numérique,

**26.** Dispositif selon l'une des revendications 24 ou 25, **caractérisé en ce que** le processeur exécute un chiffrage tout au moins au signal d'information d'exploitation numérique.

**27.** Dispositif selon l'une des revendications 22 à 26, **caractérisé en ce qu'**une installation de compression est prévue à la compression de l'information d'utilisation et/ou d'exploitation avant son stockage.

Ursprungsprogramm

analoge
Aufzeichnung
(Aufzeichnungssignal)

Signalumwandlung

Ausstrahlungssignal

Senden

Empfangen

Empfangssignal

Signalumwandlung

herkömliches Gerät

Ursprungsprogramm

Fig.1

Ursprungsprogramm                    ca.10 zusätzliche Nutzprogramme

ca. 200 Mbit/s pro Programm
bei digitaler Interpretation

analoge
Aufzeichnung
(Aufzeichnungssignal)

Datenreduktion                       Datenkompression

Reduktion
pro Programm
auf 6Mbit/s
(Pal-Qualität)

reduziertes
Aufzeichnungssignal                  Datensicherung

Datenschutz (optional)

Einlagern

Ausstrahlungssignal

Senden

Fig.2

Empfangen

Empfangssignal

herkömmliches
Fernsehgerät

PC,
Set-Top-Box

Informationstrennung

Fehlerkorrektur

Dekompression

krypt. Entschlüsselung

Ursprungsprogramm
(keine sichtbaren
Qualitätseinbußen)

10 weitere Programme
in PAL-Qualität

alternativ bis zu
150 Programme in
ausreichender Qualität
für kleine Bildschirme

Programmauswahl

ausgewählter dekodierter Kanal

Fig. 3

Ursprungsprogramm

analoge
Aufzeichnung
(Aufzeichnungssignal)

reduziertes
Aufzeichnungssignal

Kompression → Dekompression

Bildhintergrund
Grobstruktur für
menschliches Auge

Fehlerschutz

Startzeile

Feinstrukturen

TV-Bild i

1. Block
(Strukturinformation
z.B. kompr. Bildhintergrund
des folgenden Bildes)

TV-Bild i+1

Feinstruktur für
Zusatzinformationen

Fig. 4

Fig. 5